# EUROPÄISCHE PATENTSCHRIFT

(11) **EP 2 828 016 B1**
(45) Veröffentlichungstag und Bekanntmachung des Hinweises auf die Patenterteilung: **18.01.2017**
(21) Anmeldenummer: 13704606.6
(22) Anmeldetag: 14.02.2013
(51) Int. Cl.: B21D 41/04, B21D 51/24, B23K 15/00, B23K 26/00

(54) **VERFAHREN ZUR HERSTELLUNG EINES DRUCKBEHÄLTERS**
METHOD FOR PRODUCING A PRESSURE CONTAINER
PROCÉDÉ DE FABRICATION D'UN RÉCIPIENT SOUS PRESSION

(30) Priorität: 23.03.2012 DE 102012204739
(43) Veröffentlichungstag der Anmeldung: 28.01.2015
(73) Patentinhaber: Bayerische Motoren Werke Aktiengesellschaft, 80809 München (DE)
(72) Erfinder: RIESS, Robert, 85244 Roehrmoos (DE); ROTHENWÖHRER, Tim, 94469 Deggendorf (DE)
(86) Internationale Anmeldenummer: PCT/EP2013/053018
(87) Internationale Veröffentlichungsnummer: WO 2013/139538

(56) Entgegenhaltungen:
- EP-A1- 0 410 884
- WO-A1-92/16787
- WO-A1-97/28401
- DE-A1- 19 711 844
- DE-C1- 19 607 010
- FR-A1- 2 829 222
- GB-A- 1 378 421

## Beschreibung

Die Erfindung betrifft ein Verfahren zur Herstellung eines Druckbehälters, insbesondere für ein Kraftfahrzeug, insbesondere als Drucktank für Wasserstoff, nach dem Oberbegriff des ersten Anspruchs.

Es ist bereits bekannt, Wasserstoff als Kraftstoff für Kraftfahrzeuge zu verwenden und diesen dazu in einem Drucktank unter Überdruck zu speichern. Derartige Drucktanks können aus Stahl oder aus Leichtmetall bestehen. Für einen höheren Fülldruck kann zum Beispiel ein solcher, im wesentlichen zylindrischer Leichtmetalltank durch einen Faserverbundwerkstoff mit beispielsweise Glas- und/oder Kohlenstofffasern umwickelt werden.

Ein ähnlicher, nicht umwickelter Druckbehälter, gebaut aus einer Al Mg Si Legierung als Druckluftvorratsbehälter für ein Kraftfahrzeug, ist aus der DE 27 19 948 A1 bekannt. Dieser wird aus zwei zylindrischen, topfförmigen, durch Fließpressen hergestellten Halbkörpern mit gleichem Randdurchmesser durch Zusammenschweißen am Umfang hergestellt. Beim Fließpressen der Halbkörper wird mit Hilfe eines Dornes eine Anschlussbohrung im Boden des Halbkörpers erzeugt.

Bisher wurden solche zylindrischen Druckbehälter auch in der Weise hergestellt, dass eine ebene Platine zu einem Zylindermantel gerollt wurde und an ihren Stoßkanten mittels einer Längsnaht zu einem zylindrischen Rohr verschweißt wurde. Auf die offenen Enden des zylindrischen Rohres wurden dann jeweils mittels einer Umfangsschweißnaht Deckel aufgeschweißt um einen geschlossenen Behälter zu bilden. Zur Herstellung von Anschlüssen waren diese Deckel im Regelfall vorgelocht und es wurde mittels einer weiteren Schweißoperation jeweils ein Gewindeansatz in die gelochten Deckel eingesetzt. Eine ähnliche metallische Hochdruckflache beschreibt die EP 0 410 884 A1.

Diese bekannte und bislang allgemein übliche Herstellungsmethode für Druckbehälter von Kraftfahrzeugen hat zwar den Vorteil, dass man bezüglich der Materialauswahl und bezüglich der Abmessungen der Behälter in keiner Weise eingeschränkt ist und somit sowohl was die Geometrie der Behälter als auch deren Festigkeit anlangt, sich sehr genau den Anforderungen des jeweiligen Einzelfalls anpassen kann. Ein Nachteil dieses bekannten Herstellungsverfahrens liegt allerdings darin, dass durch die mehrfach hintereinander geschalteten Schweißoperationen die Herstellungszeit und damit die Herstellkosten für solche Druckbehälter relativ hoch sind.

Vor allem, wenn zum Beispiel aufgrund der Höhe des geforderten Druckniveaus und des Inhalts des Druckbehälters besondere Anforderungen an dessen Stabilität und die Qualität der Schweißnähte gestellt werden, wenn zum Beispiel ein Elektronenstrahl-Schweißverfahren im Hochvakuum verwendet werden muss, wie in der EP 0 410 884 A1 und der WO 97/28401, spielt die Herstellungszeit für die Herstellkosten eine große Rolle. So kann es mehr als acht Stunden dauern, einen Druckbehälter für Wasserstoff für ein Kraftfahrzeug in der Vakuumkammer eines Elektronenstrahlschweißgeräts über seine Befüll- und Entnahmeeinrichtungen vor dem Schweißvorgang zusammen mit der Vakuumkammer zu evakuieren, wodurch Herstellzeit und damit Herstellkosten aufgrund der langen Belegung des Elektronenstrahlschweißgeräts enorm hoch sind und eine Serienfertigung vereitelt wird.

Bei einer notwendigen Großserienfertigung sind diese Einflussgrößen jedoch von noch größerer Bedeutung und das führt zur Aufgabe der Erfindung, ein Herstellungsverfahren für Druckbehälter anzugeben, mit dem eine erhebliche Verkürzung der Herstellzeit und der Herstellkosten erreichbar ist, bei gleichzeitiger Qualitätsverbesserung.

Die Aufgabe wird durch die Verfahrensschritte des ersten Anspruchs gelöst. Weitere vorteilhafte Ausbildungen des Verfahrens beschreiben die abhängigen Ansprüche.

Nach der Erfindung ist ein Verfahren zum Herstellen eines Druckbehälters, bei dem aus einer Platine ein zylinderförmiger Mantel gebogen wird, dessen Enden so angerollt werden, dass abgerundete Stirnseiten mit zentrisch positionierten Öffnungen entstehen, die durch Verschweißen mit Einsätzen verschlossen werden, wobei wenigstens ein Einsatz wenigstens mit Befüll- und Entnahmeeinrichtungen versehen ist und Kontaktflächen zwischen dem Mantel und dem Einsatz an der Schweißstelle flächig aneinander stoßend gestaltet sind und mittels Elektronenstrahlschweißen gasdicht im Hochvakuum miteinander verbunden werden, dadurch gekennzeichnet, dass wenigstens ein Einsatz vor dem Einfahren in die Vakuumkammer so positioniert wird, dass zwischen den Kontaktflächen ein Spalt bestehen bleibt, wobei nach dem Evakuieren der Hochvakuumkammer der Spalt zwischen den Kontaktflächen geschlossen wird, indem eine automatisierte Vorrichtung den Einsatz so weit in die stirnseitige Öffnung einbringt bis sich die Kontaktflächen berühren.

Das erfindungsgemäße Verfahren löst die Aufgabe dadurch, dass für die Herstellung eines Druckbehälters das Schweißverfahren Elektronenstrahlschweißen verwendet wird, das mit hoher Schweißgeschwindigkeit eine schmale und schlanke Schweißnahtform bei geringstem thermischem Verzug erreicht, wodurch die Herstellzeit und damit die Herstellkosten erheblich gesenkt werden können und die Herstellqualität bezüglich Druckdichtigkeit bis hin zu hohen Drücken garantiert werden kann, weil vorteilhafterweise die Evakuierung des Inneren des Druckbehälters über den Spalt sehr viel schneller erfolgt, als zum Beispiel über enge Befüll- und Entnahmeeinrichtungen im Einsatz. Die Evakuierungszeit kann so bis zu 10-fach kürzer werden, was die Herstellzeit verkürzt.

Eine vorteilhafte Ausführungsform der Erfindung ist dadurch gekennzeichnet, dass die automatisierte Vorrichtung ein Reitstock zum Spannen des Druckbehälters für den Schweißvorgang ist, der sich durch hydraulischen oder pneumatischen oder elektrischen Antrieb in der geschlossenen Hochvakuumkammer automatisiert zustellen lässt und den Druckbehälter zusammen mit einem festen Reitstock über die Einsätze spannt.

Eine bevorzugte Form des erfindungsgemäßen Verfahrens ist dadurch gekennzeichnet, dass der Druckbehälter außerhalb des Hochvakuums über zwei Auflager fixiert wird und ein erster Reitstock an einen in seiner Öffnung fertig positionierten Einsatz zugestellt wird, während der andere Einsatz zu seiner Öffnung so positioniert wird, dass zwischen den Kontaktflächen ein Spalt bestehen bleibt, worauf der so vorbereitete Druckbehälter in die Vakuumkammer der Elektronenstrahlschweißanlage verbracht wird, diese evakuiert wird und darauffolgend der zweite Reitstock durch seine automatisierte Zustellung den anderen Einsatz durch Einschieben in dessen Öffnung fertig positioniert, in Folge den Druckbehälter über die beiden Einsätze und den ersten Reitstock zur Verschweißung mit den Einsätzen in Schweißposition spannt, worauf das Verschweißen der Einsätze mit dem Druckbehälter erfolgt. Dieses Herstellungsverfahren für Druckbehälter bringt eine erhebliche Verkürzung der Herstellzeit und damit Verringerung der Herstellkosten, bei gleichzeitiger Qualitätsverbesserung. Von Vorteil ist dabei, wenn der Einsatz, der mit Befüll- und Entnahmeeinrichtungen versehen ist, über den ersten Reitstock gespannt wird und wenn der andere Einsatz über den automatisierten Reitstock gespannt wird.

Im Folgenden wird die Erfindung anhand einer Figur weiter erläutert, in der schematisch ein Verfahrensschritt mit den wesentlichen dafür notwendigen Vorrichtungsteilen dargestellt ist. Erfindungswesentlich können sämtliche näher beschriebenen Merkmale sein.

Ein Druckbehälter 1, der als Wasserstofftank in einem nicht gezeichneten Kraftfahrzeug zur Verwendung vorgesehen ist, wurde aus einer Platine zum zylinderförmigen Mantel 2 gebogen, dessen Enden so angerollt wurden, dass an jedem Ende eine abgerundete Stirnseite 3 mit einer zentrisch positionierten Öffnung 4, 5 entstand. Durch Verschweißen sollen die Öffnungen 4, 5 mit Einsätzen 6, 7 verschlossen werden, wobei ein Einsatz 6 mit Befüll- und Entnahmeeinrichtungen 8, 8' versehen ist. Kontaktflächen 9, 10 an jeder Schweißstelle, zwischen dem Mantel 2 und den Einsätzen 6, 7, zum gasdichten Verbinden mittels Laser- oder Elektronenstrahlschweißen sind dazu flächig aneinander stoßend gestaltet (nur auf der rechten Seite des Druckbehälters 1 dargestellt). Das Elektronenstrahlschweißen wird im Hochvakuum durchgeführt. Entsprechende Einrichtungen, wie eine Vakuumkammer, sind nicht dargestellt.

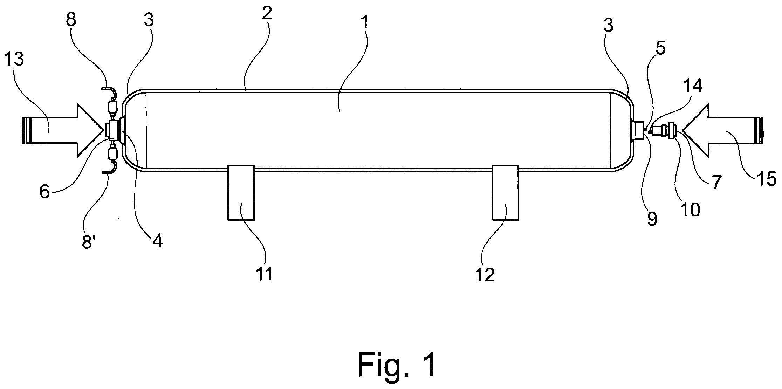

In der Figur dargestellt ist der Verfahrensschritt vor dem Verbringen des Druckbehälters 1 in die Vakuumkammer. Der Druckbehälter 1 wird außerhalb des Hochvakuums über zwei Auflager 11, 12 fixiert und ein erster Reitstock, symbolisch dargestellt durch den Pfeil 13, wird an einem in seiner Öffnung 4 fertig positionierten Einsatz 6 zugestellt. Der andere Einsatz 7 wird zu dessen Öffnung 5 so positioniert, dass zwischen den Kontaktflächen 9,10 ein Spalt 14 bestehen bleibt.

Darauf wird der so vorbereitete Druckbehälter 1 in die Vakuumkammer der Elektronenstrahlschweißanlage verbracht, diese wird evakuiert und darauffolgend wird der zweite Reitstock, symbolisch dargestellt durch den Pfeil 15, durch eine automatisierte hydraulische Zustellung fertig positioniert. Dabei wird der andere Einsatz 7 in die Öffnung 5 eingeschoben, bis die Kontaktflächen 9, 10 einander berühren. Der Druckbehälter 1 wird dadurch über die beiden Einsätze 6, 7 und die Reitstöcke 13, 15 in Schweißposition gespannt, worauf die Einsätze 6, 7 mit dem Druckbehälter 1 nacheinander oder gleichzeitig verschweißt werden.

Durch das Positionieren des anderen Einsatzes 7 in der Öffnung 5 so, dass zwischen den Kontaktflächen der Spalt 14 bestehen bleibt, kann der Druckbehälter 1, nach dem Einfahren in die Vakuumkammer, in dieser sehr schnell evakuiert werden, da die Öffnung 5 zusammen mit dem Spalt 14 sehr viel größer ist als die Öffnungsquerschnitte der Befüll- und Entnahmeeinrichtungen 8, 8' am Einsatz 6, durch die sonst die Evakuierung des Druckbehälters 1 stattfinden müsste.

## Patentansprüche

1. Verfahren zum Herstellen eines Druckbehälters (1), bei dem aus einer Platine ein zylinderförmiger Mantel (2) gebogen wird, dessen Enden so angerollt werden, dass abgerundete Stirnseiten (3) mit zentrisch positionierten Öffnungen (4, 5) entstehen, die durch Verschweißen mit Einsätzen (6, 7) verschlossen werden, wobei wenigstens ein Einsatz (6) wenigstens mit Befüll- und Entnahmeeinrichtungen (8, 8') versehen ist und Kontaktflächen (9, 10) zwischen dem Mantel (2) und den Einsätzen (6, 7) an der Schweißstelle flächig aneinanderstoßend gestaltet sind und mittels Elektronenstrahlschweißen gasdicht im Hochvakuum miteinander verbunden werden, **dadurch gekennzeichnet, dass** wenigstens ein Einsatz (7) vor dem Einfahren in eine Vakuumkammer so positioniert wird, dass zwischen den Kontaktflächen (9, 10) ein Spalt (14) bestehen bleibt, wobei nach dem Evakuieren der Hochvakuumkammer der Spalt (14) zwischen den Kontaktflächen (9, 10) geschlossen wird, indem eine automatisierte Vorrichtung den Einsatz (7) so weit in die stirnseitige Öffnung (5) einbringt, bis sich die Kontaktflächen (9, 10) berühren.

2. Verfahren nach Anspruch 1, **dadurch gekennzeichnet, dass** die automatisierte Vorrichtung ein Reitstock (15) zum Spannen des Druckbehälters (1) für den Schweißvorgang ist, der sich durch hydraulischen oder pneumatischen oder elektrischen Antrieb in der geschlossenen Hochvakuumkammer automatisiert zustellen lässt und den Druckbehälter (1) zusammen mit einem festen Reitstock (13) über die Einsätze (6, 7) spannt.

3. Verfahren nach Anspruch 2, **dadurch gekennzeichnet, dass** der Druckbehälter (1) außerhalb des Hochvakuums über zwei Auflager (11, 12) fixiert wird und der feste Reitstock (13) an einen in seiner Öffnung (4) fertig positionierten Einsatz (6) positioniert wird, während der andere Einsatz (7) zu seiner Öffnung (5) so positioniert wird, dass zwischen den Kontaktflächen (9, 10) ein Spalt (14) bestehen bleibt, worauf der so vorbereitete Druckbehälter (1) in die Vakuumkammer der Elektronenstrahischweißanlage verbracht wird, diese evakuiert wird und darauffolgend der zweite Reitstock (15) durch seine automatisierte Zustellung den anderen Einsatz (7) durch Einschieben in dessen Öffnung (5) fertig positioniert, in Folge den Druckbehälter (1) über die beiden Einsätze (6, 7) und den festen Reitstock (13) zur Verschweißung mit den Einsätzen (6, 7) in Schweißposition spannt, worauf das Verschweißen der Einsätze (6, 7) mit dem Druckbehälter (1) erfolgt.

4. Verfahren nach einem der Ansprüche 2 oder 3, **dadurch gekennzeichnet, dass** der Einsatz (6), der mit Befüll- und Entnahmeeinrichtungen (8, 8') versehen ist, über den festen Reitstock (13) gespannt wird.

5. Verfahren nach einem der Ansprüche 2 bis 4, **dadurch gekennzeichnet, dass** der andere Einsatz (7) über den automatisierten Reitstock (15) gespannt wird.

## Claims

1. A method for producing a pressure vessel (1), in which a cylindrical casing (2) is bent out of a blank, the ends of said casing being rolled so that rounded end faces (3) having centrally positioned openings (4, 5) are produced which are closed by welding with inserts (6, 7), wherein at least one insert (6) is at least provided with filling and removal means (8, 8'), and contact surfaces (9, 10) between the casing (2) and the inserts (6, 7) are configured to abut in a planar manner at the weld and are joined together in a gas-tight manner under a high vacuum by electron beam welding, **characterised in that** before being moved into a vacuum chamber, at least one insert (7) is positioned so that a gap (14) remains between the contact surfaces (9, 10), the gap (14) between the contact surfaces (9, 10) being closed after evacuation of the high vacuum chamber, in which an automated device introduces the insert (7) into the end-face opening (5) until the contact surfaces (9, 10) contact one another.

2. A method according to claim 1, **characterised in that** the automated device is a tailstock (15) for clamping the pressure vessel (1) for the welding procedure, which tailstock is delivered in an automated manner by a hydraulic or pneumatic or electric drive in the closed high vacuum chamber and clamps the pressure vessel (1) together with a fixed tailstock (13) via the inserts (6, 7).

3. A method according to claim 2, **characterised in that** the pressure vessel (1) is fixed outside the high vacuum by two supports (11, 12) and the fixed tailstock (13) is positioned on an insert (6) which is ready positioned in its opening (4), while the other insert (7) is positioned relative to its opening (5) so that a gap (14) remains between the contact surfaces (9, 10), whereupon the pressure vessel (1), prepared in this manner, is introduced into the vacuum chamber of the electron beam welding plant, the vacuum chamber is evacuated and thereafter, due to its automated delivery, the second tailstock (15) ready positions the other insert (7) by insertion into the opening (5) thereof, then clamps the pressure vessel (1) in the clamping position via the two inserts (6, 7) and the fixed tailstock (13) for welding with the inserts (6, 7), whereupon the inserts (6, 7) are welded with the pressure vessel (1).

4. A method according to either one of claims 2 or 3, **characterised in that** the insert (6) which is provided with filling and removal means (8, 8') is clamped by the fixed tailstock (13).

5. A method according to any one of claims 2 to 4, **characterised in that** the other insert (7) is clamped by the automated tailstock (15). ,

## Revendications

1. Procédé de fabrication d'un réservoir sous pression (1), selon lequel à partir d'un flan on cintre une enveloppe cylindrique (2) dont les extrémités sont roulées de façon à obtenir des faces frontales arrondies (3) ayant des ouvertures centrales (4, 5) qui sont fermées par soudage avec des inserts (7, 8), au moins un insert (6) étant au moins équipé de dispositifs de remplissage et de soutirage (8, 8'), et les surfaces de contact (9, 10) entre l'enveloppe (2) et les inserts (7, 8) étant réalisées de façon à venir en butée à plat au niveau des emplacements de soudage et étant reliées de façon à être étanches aux gaz sous vide poussé par soudage par bombardement électronique,
**caractérisé en ce qu'**
avant son introduction dans une chambre à vide au moins un insert (7) est positionné de sorte qu'entre les surfaces de contact (9, 10) subsiste un intervalle (14), et, après la mise sous vide de la chambre à vide poussé, l'intervalle (14) entre les surface de contact (9, 10) est fermé du fait qu'un dispositif automatisé introduit les inserts (7) dans l'ouverture frontale (5) à une profondeur entraînant la mise en contact des surfaces de contact (9, 10).

2. Procédé conforme à la revendication 1,
**caractérisé en ce que**
le dispositif automatisé est constitué par une poupée mobile (15) permettant de serrer le réservoir sous pression (1) pour permettre le soudage, qui peut être automatiquement positionné dans la chambre sous vide poussé fermée par commande hydraulique pneumatique ou électrique et serre le réservoir sous pression (1) sur les inserts (6, 7) en coopération avec une contre poupée fixe (15).

3. Procédé conforme à la revendication 2,
**caractérisé en ce que**
le réservoir sous pression (1) est fixé à l'extérieur du vide poussé sur deux coussinets supports (11, 12) et la contre poupée fixe (13) est positionnée sur un insert (6) positionné dans sa position finale dans son ouverture (4) tandis que l'autre insert (7) est positionné par rapport à son ouverture (5) de sorte que subsiste un intervalle (14) entre les surfaces de contact (9, 10), le réservoir sous pression (1) ainsi préparé étant transféré dans la chambre à vide de l'installation de soudage par bombardement électronique, celle-ci étant mise sous vide puis la seconde poupée (15) positionnant par son réglage automatisé l'autre insert (7) dans sa position finale en le faisant glisser dans son ouverture (5), et serrant le réservoir sous pression, dans la position de soudage sur les deux inserts (6, 7) et la contre poupée fixe (13) pour permettre son soudage avec les inserts (6, 7), le soudage des inserts (6, 7) avec le réservoir sous pression (1) étant effectué.

4. Procédé conforme à l'une des revendications 2 et 3,
**caractérisé en ce que**
l'insert (6) qui est équipé des dispositifs de remplissage et de soutirage (8, 8'), est serré par l'intermédiaire de la contre poupée fixe (13).

5. Procédé conforme à l'une des revendications 2 et 4,
**caractérisé en ce que**
l'autre insert (7) est serré par l'intermédiaire de la poupée automatisée (15).
